(19) Europäisches Patentamt
European Patent Office
Office européen des brevets

(11) **EP 4 317 348 A1**

(12) **EUROPEAN PATENT APPLICATION**
published in accordance with Art. 153(4) EPC

(43) Date of publication:
**07.02.2024 Bulletin 2024/06**

(21) Application number: **22932751.5**

(22) Date of filing: **25.03.2022**

(51) International Patent Classification (IPC):
*C09J 133/08* (2006.01)   *C09J 133/10* (2006.01)
*C09J 11/04* (2006.01)   *C08F 220/18* (2006.01)
*C08F 220/14* (2006.01)   *C08F 220/44* (2006.01)
*C08F 220/56* (2006.01)   *H01M 4/62* (2006.01)
*H01M 50/446* (2021.01)   *H01M 10/0525* (2010.01)

(52) Cooperative Patent Classification (CPC):
C08F 212/10; C08F 220/06; C08F 220/14;
C08F 220/18; C08F 220/20; C08F 220/44;
C08F 220/46; C08F 220/48; C08F 220/56;
C08F 222/14; C09J 11/04; C09J 11/06;
C09J 133/08; C09J 133/10; H01M 4/62;   (Cont.)

(86) International application number:
**PCT/CN2022/083171**

(87) International publication number:
**WO 2023/178690 (28.09.2023 Gazette 2023/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
• **KANG, Haiyang**
**Ningde City, Fujian 352100 (CN)**
• **ZHENG, Yi**
**Ningde City, Fujian 352100 (CN)**
• **SUN, Chengdong**
**Ningde City, Fujian 352100 (CN)**
• **YU, Yang**
**Ningde City, Fujian 352100 (CN)**
• **OUYANG, Chuying**
**Ningde City, Fujian 352100 (CN)**

(74) Representative: **Gong, Jinping**
**CocreateIP**
**Neumarkterstr. 21**
**81673 München (DE)**

(54) **BINDER AND RELATED SEPARATOR, ELECTRODE SHEET, BATTERY, BATTERY MODULE, BATTERY PACK AND ELECTRIC DEVICE**

(57)    This application provides a binder and a separator containing same, an electrode plate, and a related secondary battery, a battery module, a battery pack, and an electrical device. The binder includes an organic polymer and an inorganic compound. The organic polymer is polymerized from a first polymerizing monomer containing an ester bond, a second polymerizing monomer containing a nitrile bond, and a third polymerizing monomer containing an amide bond. A weight ratio between the first polymerizing monomer, the second polymerizing monomer, and the third polymerizing monomer is 1: (0 to 0.8): (0 to 0.15), and optionally 1: (0.05 to 0.2): (0.05 to 0.1). When the binder is applied to the separator, the resistance of the separator is reduced, the ionic conductivity of the separator is improved, and the battery performance is improved.

EP 4 317 348 A1

(52) Cooperative Patent Classification (CPC): (Cont.)
**H01M 10/0525; H01M 50/446;** Y02E 60/10

**Description**

**TECHNICAL FIELD**

This application relates to the technical field of lithium batteries, and in particular, to a binder and a separator containing same, an electrode plate, a related secondary battery, a battery module, a battery pack, and an electrical device.

**BACKGROUND**

In recent years, lithium-ion batteries have been applied wider in many fields, including energy storage power systems such as hydro, thermal, wind, and solar power stations, and other fields such as electric tools, electric bicycles, electric motorcycles, and electric vehicles, military equipment, and aerospace. However, a binder for use in a battery in the prior art exhibits disadvantages such as a relatively high melting point and poor bonding performance, and consequently, is unable to effectively bond a component of the battery, thereby deteriorating the kinetic performance of the battery and causing safety issues. Therefore, how to develop a binder suitable for a battery system is still an urgent problem to researchers.

**SUMMARY**

This application is developed in view of the above problems. An objective of this application is to provide a binder. The binder provides high bonding performance under a condition suitable for battery processing, thereby enhancing the kinetic performance and safety performance of the battery.

To achieve the above objective, this application provides a binder, a separator containing same, an electrode plate, and a related secondary battery, a battery module, a battery pack, and an electrical device.

A first aspect of this application provides a binder, including an organic polymer and an inorganic compound. The organic polymer is polymerized from at least the following monomers:

a first polymerizing monomer, containing at least one ester bond, where the first polymerizing monomer is optionally one or more of methyl acrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobomyl methacrylate, lauryl methacrylate, 2-hydroxyethyl methacrylate, 2-hydroxypropyl methacrylate, vinyl acetate, trifluoroacetate methacrylate, glycidyl methacrylate, or trimethylolpropane triacrylate; and further optionally, the first polymerizing monomer is one or more of methyl methacrylate, lauryl acrylate, lauryl methacrylate, or trimethylolpropane triacrylate;

a second polymerizing monomer, containing at least one nitrile bond, where the second polymerizing monomer is optionally one or more of acrylonitrile, methacrylonitrile, or ethacrylonitrile, and further optionally, one or more of acrylonitrile or methacrylonitrile; and

a third polymerizing monomer, containing at least one amide bond, where the third polymerizing monomer is optionally one or more of acrylamide, N-methylolacrylamide, or N-butoxymethacrylamide, and further optionally, one or more of acrylamide or N-methylolacrylamide.

A weight ratio between the first polymerizing monomer, the second polymerizing monomer, and the third polymerizing monomer is 1: (0 to 0.8): (0 to 0.15), and optionally 1: (0.05 to 0.2): (0.05 to 0.1).

When the organic polymer is polymerized from the above monomers, the prepared binder exhibits high bonding performance and possesses a relatively low glass transition temperature. In this way, the binder is suitable for exerting the bonding performance sufficiently under operating conditions of the battery, thereby improving the kinetic performance and safety performance of the battery.

In any embodiment, optionally, based on a total weight of the organic polymer, a weight percent of the first polymerizing monomer is 60 wt% to 100 wt%, and optionally 60 wt% to 90 wt%.

A weight percent of the second polymerizing monomer is 0 wt% to 30 wt%, and optionally 5 wt% to 15 wt%.

A weight percent of the third polymerizing monomer is 0 wt% to 40 wt%, and optionally 0 wt% to 25 wt%.

In any embodiment, optionally, volume average particle diameters $D_{10}$, $D_{50}$, and $D_{90}$ of the binder satisfy: $(D_{90} - D_{10})/D_{50}$ is less than 2.5, optionally less than 2, and further optionally less than 1.8.

In any embodiment, optionally, a weight percent of particles of the organic polymer is 50 wt% to 99.9 wt%, optionally 60 wt% to 99 wt%, and further optionally 70 wt% to 99 wt%, based on a total dry weight of the binder.

A weight percent of the inorganic compound is 0.1 wt% to 50 wt%, optionally 1 wt% to 40 wt%, and further optionally 1 wt% to 30 wt%, based on a total dry weight of the binder.

In any embodiment, optionally, a weight ratio between the organic polymer and the inorganic compound is 99: 1 to 1: 1, and optionally 70: 30 to 1: 1.

In any embodiment, optionally, the inorganic compound is one or more selected from: an oxide of silicon, aluminum, calcium, zinc, or magnesium; sodium sulfate; sodium benzoate; calcium carbonate; or a modified material thereof. Optionally, the inorganic compound is one or more of silicon dioxide, silica sol, aluminum oxide, zinc oxide, magnesium oxide, or sodium benzoate. Further optionally, the inorganic compound is one or more of vapor-phase silicon dioxide, silicon micropowder, aluminum oxide, or sodium benzoate.

In any embodiment, optionally, a surface of a particle of the binder is uneven, and inorganic oxide clusters with a particle diameter of 10 to 200 nm are evenly distributed on the surface.

In any embodiment, optionally, a glass transition temperature of the binder is -20 °C to 30 °C.

A second aspect of this application provides a separator, including the binder according to the first aspect of this application.

A third aspect of this application provides an electrode plate, including the binder according to the first aspect of this application.

A fourth aspect of this application provides a secondary battery. The secondary battery includes at least one of the binder according to the first aspect of this application, the separator according to the second aspect of this application, or the electrode plate according to the third aspect of this application.

A fifth aspect of this application provides a battery module, including the secondary battery according to the third aspect of this application.

A sixth aspect of this application provides a battery pack, including the battery module according to the fourth aspect of this application.

A seventh aspect of this application provides an electrical device. The electrical device includes at least one of the secondary battery according to the fourth aspect of this application, the battery module according to the fifth aspect of this application, or the battery pack according to the sixth aspect of this application.

This application brings at least the following beneficial effects:

In the binder according to this application, the organic polymer is polymerized from the first polymerizing monomer, the second polymerizing monomer, and the third polymerizing monomer at a specified ratio. Each of the polymerizing monomers contains a different functional group. The obtained organic polymer can exert the advantages of each polymerizing monomer sufficiently, so that the binder polymer containing the organic polymer exhibits high bonding performance and possesses a relatively low glass transition temperature. In this way, the binder can exert the bonding performance sufficiently under working conditions of the battery, thereby improving the kinetic performance and safety performance of the secondary battery. In addition, when applied to the separator, the binder reduces the resistance of the separator and increases the ion conductivity of the separator, thereby improving the battery performance.

The battery module, the battery pack, and the electrical device according to this application include the secondary battery according to this application, and therefore, have at least the same advantages as the secondary battery.

**BRIEF DESCRIPTION OF DRAWINGS**

FIG. 1 is a scanning electron microscope image of a binder prepared in Embodiment 1 of this application and observed at different magnifications;
FIG. 2 is a schematic diagram of a secondary battery according to an embodiment of this application;
FIG. 3 is an exploded view of a secondary battery shown in FIG. 2 according to an embodiment of this application;
FIG. 4 is a schematic diagram of a battery module according to an embodiment of this application;
FIG. 5 is a schematic diagram of a battery pack according to an embodiment of this application;
FIG. 6 is an exploded view of the battery pack shown in FIG. 5 according to an embodiment of this application; and
FIG. 7 is a schematic diagram of an electrical device that uses a secondary battery as a power supply according to an embodiment of this application.

List of reference numerals:
1. battery pack; 2. upper box; 3. lower box; 4. battery module; 5. secondary battery; 51. housing; 52. electrode assembly; 53. top cap assembly.

**DETAILED DESCRIPTION OF EMBODIMENTS**

The following describes and discloses in detail embodiments of a binder, a related separator, an electrode plate, a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, any one of the following conditions satisfies the condition "A or B" : A is true (or existent) and B is false (or absent); A is false (or absent) and B is true (or existent); and, both A and B are true (or existent).

In practical work, the inventor finds that some of binders for use in a battery in the prior art exhibit low bonding performance, and some possess a relatively high melting point. Such binders can hardly exert the bonding effect sufficiently under operating conditions of the battery, and cannot effectively bond a battery component, thereby causing the component to detach or fall off during use, and in turn, deteriorating the kinetic performance of the battery and causing safety hazards.

Unexpectedly, after extensive experiments, the inventor finds that high bonding performance is achieved by the organic polymer polymerized from some monomers at a specified weight ratio, the monomers each containing a specified functional group. The organic polymer is suitable for exerting the bonding performance sufficiently under operating conditions of a battery, thereby improving the kinetic performance and safety performance of the secondary battery. In addition, when applied to the separator, the binder reduces the resistance of the separator and increases the ion conductivity of the separator, thereby improving the battery performance.

**[Binder]**

A first aspect of this application provides a binder, including an organic polymer and an inorganic compound. The organic polymer is polymerized from at least the following monomers:

a first polymerizing monomer, containing at least one ester bond, where the first polymerizing monomer is optionally one or more of methyl acrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroacetate methacrylate, glycidyl methacrylate, or trimethylolpropane triacrylate; and further optionally, the first polymerizing monomer is one or more of methyl methacrylate, lauryl acrylate, lauryl methacrylate, or trimethylolpropane triacrylate;

a second polymerizing monomer, containing at least one nitrile bond, where the second polymerizing monomer is optionally one or more of acrylonitrile, methacrylonitrile, or ethacrylonitrile, and further optionally, one or more of acrylonitrile or methacrylonitrile; and

a third polymerizing monomer, containing at least one amide bond, where the third polymerizing monomer is optionally one or more of acrylamide, N-methylolacrylamide, or N-butoxymethacrylamide, and further optionally, one or more of acrylamide or N-methylolacrylamide.

A weight ratio between the first polymerizing monomer, the second polymerizing monomer, and the third polymerizing monomer is 1: (0 to 0.8): (0 to 0.15), and optionally 1: (0.05 to 0.2): (0.05 to 0.1).

The binder according to this application includes an organic polymer. The organic polymer is polymerized, at a specified weight ratio, from the first polymerizing monomer that contains an ester bond, the second polymerizing monomer that contains a nitrile bond, and the third polymerizing monomer that contains an amide bond. This facilitates sufficient exertion of the synergistic advantages brought by the monomers, so that the prepared organic polymer exhibits high bonding performance and possesses an appropriate glass transition temperature. In this way, the binder is suitable for exerting the bonding performance sufficiently under operating conditions of the battery, thereby improving the kinetic performance and safety performance of the secondary battery. The binder according to this application further includes an inorganic compound, thereby improving the flame retardancy performance of the binder, and in turn, improving the safety performance of the secondary battery. In addition, when applied to the separator, the binder reduces the resistance of the separator and increases the ion conductivity of the separator, thereby improving the battery performance.

In some embodiments, optionally, the weight percent of the first polymerizing monomer is 60 wt% to 100 wt%, and optionally 60 wt% to 90 wt%; the weight percent of the second polymerizing monomer is 0 wt% to 30 wt%, and optionally 5 wt% to 15 wt%; and the weight percent of the third polymerizing monomer is 0 wt% to 40 wt%, and optionally 0 wt% to 25 wt%, based on a total weight of the organic polymer.

When the weight percent of the polymerizing monomers falls within the above ranges, the bonding performance of the binder is improved. In addition, the organic polymer made from the polymerizing monomers that satisfy the above ranges possesses an appropriate glass transition temperature, thereby facilitating a sufficient bonding force to be provided under the operating conditions of the battery.

In some embodiments, optionally, a volume average particle diameter $D_{50}$ of the binder satisfies $3 < D_{50} \leq 10$ $\mu$m, and optionally, is 5 $\mu$m to 8 $\mu$m.

If the particle diameter of the binder is deficient, the binder may block pores in a separator when applied to the separator, thereby increasing the internal resistance of the battery and deteriorating the kinetic performance. If the particle diameter of the binder is excessive, the binder may be inapplicable to the preparation of a battery cell.

In some embodiments, optionally, volume average particle diameters $D_{10}$, $D_{50}$, and $D_{90}$ of the binder satisfy: $(D_{90} - D_{10})/D_{50}$ is less than 2.5, optionally less than 2, and further optionally less than 1.8.

The narrower the span of the particles of the binder, the more uniform the particles of the prepared binder, and the more sufficiently the binder can exert the bonding effect.

In some embodiments, optionally, the weight percent of particles of the organic polymer is 50 wt% to 99.9 wt%, optionally 60 wt% to 99 wt%, and further optionally 70 wt% to 99 wt%, based on a total dry weight of the binder.

The weight percent of the inorganic compound is 0.1 wt% to 50 wt%, optionally 1 wt% to 40 wt%, and further optionally 1 wt% to 30 wt%, based on a total dry weight of the binder.

If the weight percent of the organic polymer is deficient or the weight percent of the inorganic substance is excessive, the overall bonding performance of the binder may be insufficient, or even unable to keep an integrated state of the organic polymer and the inorganic compound. When the weight percent of inorganic compound is deficient, the flame retardance performance of the binder may be relatively low.

In some embodiments, optionally, the weight ratio between the organic polymer and the inorganic compound is 99: 1 to 1: 1, and optionally 70: 30 to 1: 1.

When the weight ratio between the organic polymer and the inorganic compound falls within the above range, the synergistic effect of the organic polymer and the inorganic compound can be exerted sufficiently, so that the binder exhibits high bonding performance and high flame retardance performance.

In some embodiments, optionally, the inorganic compound is one or more selected from: an oxide of silicon, aluminum, calcium, zinc, or magnesium; sodium sulfate; sodium benzoate; calcium carbonate; or a modified material thereof. Optionally, the inorganic compound is one or more of silicon dioxide, silica sol, aluminum oxide, zinc oxide, magnesium oxide, or sodium benzoate. Further optionally, the inorganic compound is one or more of vapor-phase silicon dioxide, silicon micropowder, aluminum oxide, or sodium benzoate.

In some embodiments, optionally, a surface of a particle of the binder is uneven, and inorganic oxide clusters with a particle diameter of 10 to 200 nm are evenly distributed on the surface.

During research, the inventor unexpectedly finds that, when the surface of the binder particle satisfies the above conditions, the organic polymer is facilitated to disperse uniformly, thereby improving the bonding performance of the binder.

In some embodiments, optionally, a weight-average molecular weight of the organic polymer is 500,000 to 1,200,000, and optionally 800,000 to 1,000,000. The molecular weight of the organic polymer may be measured by a method commonly used in this field, for example, measured by gel permeation chromatography with reference to the standard GB/T 21863-2008.

In some embodiments, optionally, a glass transition temperature of the binder is - 20 °C to 30 °C. The glass transition temperature may be measured by a method commonly used in this field, for example, measured by differential scanning calorimetry with reference to the standard GB/T 19466.2.

When the glass transition temperature of the binder falls within the above range, under the operating conditions of the battery, the binder can exert the bonding performance sufficiently, provide a sufficient bonding force for the battery component, and avoid deterioration of the kinetic performance of the battery and safety hazards caused by the detachment or fall-off of the component.

This application further provides a method for preparing the binder disclosed in the first aspect of this application. The method includes at least the following steps:

Step 1: Providing a first polymerizing monomer, a second polymerizing monomer, and a third polymerizing monomer, where the weight ratio between the first polymerizing monomer, the second polymerizing monomer, and the third polymerizing monomer is 1: (0 to 0.8): (0 to 0.15), and optionally 1: (0.05 to 0.2): (0.05 to 0.1).

Step 2: Polymerizing the monomers to obtain an organic polymer.

Step 3: Adding an organic solvent and an inorganic compound into the organic polymer obtained in step 2, and stirring well to obtain a mixed slurry.

Step 4: Drying the mixed slurry obtained in step 3, and grinding and pulverizing the slurry to obtain the binder disclosed in this application.

It is hereby noted that the monomers may be polymerized by a polymerization method commonly used in this field, for example, by emulsion polymerization or suspension polymerization.

In some embodiments, optionally, an additive such as an emulsifier (for example, sodium dodecyl sulfate) and a polymerization initiator (for example, ammonium persulfate) may be added to a polymerization system of polymerizing monomers.

**[Separator]**

A second aspect of this application provides a separator. The separator includes the binder according to the first aspect of this application. When applied to the separator, the binder according to the first aspect of this application reduces the resistance of the separator and increases the ion conductivity of the separator, thereby improving the battery performance.

The type of the substrate of the separator is not particularly limited in this application, and may be any well-known porous separator substrate that is highly stable both chemically and mechanically.

In some embodiments, the separator substrate may be at least one selected from glass fiber, non-woven fabric, polyethylene, polypropylene, or polyvinylidene difluoride. The separator may be a single-layer film or a multilayer composite film, without being particularly limited. When the separator is a multilayer composite film, materials in different layers may be identical or different, without being particularly limited.

The separator according to this application may be prepared by a conventional preparation method of separators in the art. For example, a preparation process may include: dissolving the binder according to the first aspect of this application in an organic solvent to obtain a slurry, applying the slurry onto a separator material, and then drying the slurry to remove the organic solvent and obtain a separator disclosed in this application.

In some embodiments, optionally, the coating density of the binder on the separator substrate is 0.3 to 1.0 $g/m^2$, and optionally 0.3 to 0.8 $g/m^2$.

**[Electrode plate]**

A third aspect of this application provides an electrode plate. The electrode plate includes the binder according to the first aspect of this application. The electrode plate may be prepared by a method commonly used in this field.

It is hereby noted that the electrode plate described herein may be a positive electrode plate or a negative electrode plate.

The positive electrode plate includes a positive current collector and a positive film layer that overlays at least one surface of the positive current collector. The positive film layer includes the binder according to the first aspect of this application.

As an example, the positive current collector includes two surfaces opposite to each other in a thickness direction of the positive current collector. The positive film layer is disposed on either or both of the two opposite surfaces of the positive current collector.

In some embodiments, the positive current collector may be a metal foil or a composite current collector. For example, the metal foil may be an aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive active material may be a positive active material that is well known for use in a battery in the art. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as $LiCoO_2$), lithium nickel oxide (such as $LiNiO_2$), lithium manganese oxide (such as $LiMnO_2$ and $LiMn_2O_4$), lithium nickel cobalt oxide, lithium manganese cobalt oxide, lithium nickel manganese oxide, lithium nickel cobalt manganese oxide (such as $LiNi_{1/3}Co_{1/3}Mn_{1/3}O_2$ (briefly referred to as NCM333), $LiNi_{0.5}Co_{0.2}Mn_{0.3}O_2$ (briefly referred to as NCM523), $LiNi_{0.5}Co_{0.25}Mn_{0.25}O_2$ (briefly referred to as NCM211), $LiNi_{0.6}Co_{0.2}Mn_{0.2}O_2$ (briefly referred to as NCM622), $LiNi_{0.8}Co_{0.1}Mn_{0.1}O_2$ (briefly referred to as NCM811)), lithium nickel cobalt aluminum oxide (such as $LiNi_{0.85}Co_{0.15}Al_{0.05}O_2$), or a modified compound thereof. Examples of the olivine-structured lithium-containing phosphate may include, but without being limited to, at least one of lithium iron phosphate (such as $LiFePO_4$ (briefly referred to as LFP)), a composite of lithium iron phosphate and carbon, lithium manganese phosphate (such as $LiMnPO_4$), a composite of lithium manganese phosphate and carbon, lithium manganese iron phosphate, or a composite of lithium manganese iron phosphate and carbon.

In some embodiments, the positive film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate, such as the positive active material, the conductive agent, the binder according to the first aspect of this application, and any other ingredients, into a solvent (such as N-methyl-pyrrolidone) to form a positive slurry, coating a positive current collector with the positive slurry, and performing steps such as drying and cold calendering to obtain the positive electrode plate.

In some embodiments, optionally, the binder according to the first aspect of this application is applied in the positive electrode plate at a weight percent of 1 wt% to 3 wt% based on the total weight of the positive film layer.

Similarly, the electrode plate described herein may be a negative electrode plate. The negative electrode plate includes a negative current collector and a negative film layer that overlays at least one surface of the negative current collector. The negative film layer includes the binder according to the first aspect of this application.

As an example, the negative current collector includes two surfaces opposite to each other in a thickness direction of the negative current collector. The negative film layer is disposed on either or both of the two opposite surfaces of the negative current collector.

In some embodiments, the negative current collector may be a metal foil or a composite current collector. For example, the metal foil may be a copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well known for use in a battery in the art. As an example, the negative active material may include at least one of the following materials: artificial graphite, natural graphite, soft carbon, hard carbon, silicon-based material, tin-based material, lithium titanium oxide, and the like. The silicon-based material may be at least one selected from simple-substance silicon, a silicon-oxygen compound, a silicon-carbon composite, a silicon-nitrogen composite, and a silicon alloy. The tin-based material may be at least one selected from simple-substance tin, tin-oxygen compound, or tin alloy. However, this application is not limited to such materials, and other conventional materials usable as a negative active material of a battery may be used instead.

One of the negative active materials may be used alone, or at least two thereof may be used in combination.

In some embodiments, the negative film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate, such as the negative active material, the conductive agent, the binder according to the first aspect of this application, and any other ingredients, in a solvent (such as deionized water) to form a negative slurry, coating a negative current collector with the negative slurry, and performing steps such as drying and cold calendering to obtain the negative electrode plate.

In some embodiments, optionally, the binder according to the first aspect of this application is applied in the negative electrode plate at a weight percent of 1 wt% to 3 wt% based on the total weight of the negative film layer.

**[Secondary battery]**

A fourth aspect of this application provides a secondary battery. The secondary battery includes at least one of the binder according to the first aspect of this application, the separator according to the second aspect of this application, or the electrode plate according to the third aspect of this application.

Generally, the secondary battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

The secondary battery may be prepared by a method commonly used in this field. For example, a preparation process includes: making an electrode assembly out of the positive electrode plate, the negative electrode plate, and the separator by a winding process or a stacking process, and then injecting an electrolytic solution into the electrode assembly, and sealing the electrode assembly to obtain a secondary battery.

**[Electrolyte]**

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolytic solution. The electrolytic solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolytic solution further optionally includes an additive. For example, the additive may include a negative film-forming additive or a positive film-forming additive. The additive may further include an additive capable of improving specified performance of the battery, for example, an additive for improving overcharge performance of the battery, or an additive for improving high- or low-temperature performance of the battery.

**[Battery module, battery pack, and electrical device]**

A fifth aspect of this application provides a battery module, including the secondary battery according to the third aspect of this application. The battery module may be prepared by a method commonly used in this field.

A sixth aspect of this application provides a battery pack, including the battery module according to the fourth aspect of this application. The battery pack may be prepared by a method commonly used in this field.

A seventh aspect of this application provides an electrical device. The electrical device includes at least one of the secondary battery according to the fourth aspect of this application, the battery module according to the fifth aspect of this application, or the battery pack according to the sixth aspect of this application.

Next, a secondary battery, a battery module, a battery pack, and an electrical device according to this application are described below in detail with due reference to drawings.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

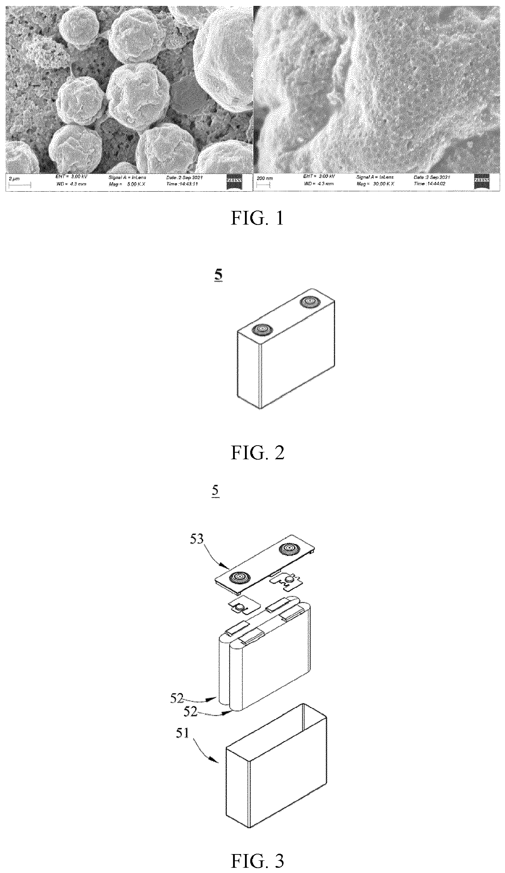

The shape of the secondary battery is not particularly limited in this application, and may be cylindrical, prismatic or any other shape. FIG. 2 shows a prismatic secondary battery 5 as an example.

In some embodiments, referring to FIG. 3, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is made on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolytic solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

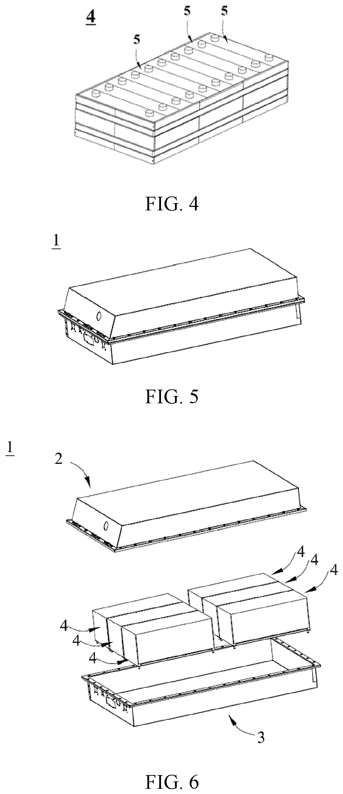

FIG. 4 shows a battery module 3 as an example. Referring to FIG. 4, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

FIG. 5 and FIG. 6 show a battery pack 1 as an example. Referring to FIG. 5 and FIG. 6, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

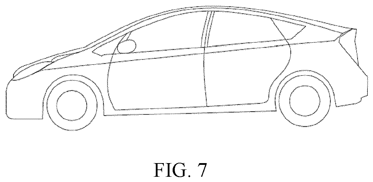

FIG. 7 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

**Embodiments**

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

**I. Separator**

**Comparative Embodiment 1**

Preparing an organic polymer 1-1

Mixing well the following monomers under a room temperature: 50 wt% 2-hydroxyethyl acrylate, 40 wt% n-butyl acrylate, 5 wt% methyl methacrylate, and 5 wt% trimethylolpropane triacrylate. Adding 100 grams of mixed monomers, 3 grams of sodium dodecyl sulfate as an emulsifier, 1 gram of ammonium persulfate as an initiator, and 120 grams of deionized water into a 500 mL four-necked flask equipped with a mechanical stirring unit, a thermometer, and a condenser pipe. Stirring and emulsifying at a speed of 1600 rpm for 30 minutes. Subsequently, heating up to 75 °C under the protection of nitrogen. Keeping reaction for 4 hours, and then adjusting the pH to a value of 6 to 8, and cooling down immediately to below 40 °C. Outputting the product to obtain an organic polymer 1-1 in an emulsion state in which the solid content is approximately 45%.

Preparing a binder 1-1

Adding 450 grams of silicon dioxide (by dry weight) and 1 kg of deionized water into 1 kg of organic polymer 1. Stirring well for 1 hour, and then spray-drying the mixture to remove the solvent and obtain a binder powder. Subsequently, grinding and pulverizing the mixture to obtain a binder 1-1 in which the $D_{50}$ particle diameter is 6 $\mu$m and the span is 1.78.

Preparing a separator 1-1

Using the following commercially available material as a separator substrate: a PP-PE copolymer microporous film (model: 20, manufactured by Zhuogao Electronic Technology Co., Ltd.) with a thickness of 20 $\mu$m and with an average pore diameter of 80 nm. Dissolving the prepared binder 1 in N-methyl-pyrrolidone (NMP), stirring well to obtain a slurry. Subsequently, applying the slurry onto the PP-PE copolymer microporous separator. Subsequently, drying the slurry to remove the organic solvent and obtain the separator 1-1 in which the coating density of the binder 1 is 0.5 g/m$^2$.

**Comparative Embodiment 2 and Embodiments 1 to 8**

Steps in Comparative Embodiment 2 and Embodiments 1 to 8 are identical to those in Comparative Embodiment 1 except the type and dosage of the polymerizing monomer and inorganic compound applied, as set out in detail in Table 1.

**II. Secondary Battery**

**Preparing a positive electrode plate**

Mixing the positive active material lithium iron phosphate (LiFePO$_4$), the conductive agent acetylene black, and the binder PVDF at a weight ratio of 96.5: 2: 1.5, dissolving the mixture in a solvent N-methyl-pyrrolidone (NMP), and stirring well to obtain a positive slurry. Coating an aluminum foil with the positive slurry evenly, and performing drying, cold pressing, and slitting to obtain a positive electrode plate. Of the resultant positive active material layer, the areal density is 19.5 mg/cm$^2$, and the compacted density is 2.4 g/cm$^3$.

**Preparing a negative electrode plate**

Mixing well the graphite, the conductive agent acetylene black, the binder PVDF, and the thickener sodium carboxymethyl cellulose (CMC) at a weight ratio of 96.5: 0.7: 1.8: 1 in a deionized water solvent, and stirring well to obtain a negative slurry. Coating a negative current collector copper foil with the negative slurry evenly, and performing drying, cold pressing, and slitting to obtain a negative electrode plate. Of the resultant negative active material layer, the areal density is 9.8 mg/cm$^2$, and the compacted density is 1.65 g/cm$^3$.

**Preparing an electrolytic solution**

Mixing well the ethylene carbonate (EC) and the ethyl methyl carbonate (EMC) well at a weight ratio of 50: 50 to obtain an organic solvent, and then adding $LiPF_6$ into the organic solvent. Stirring well to obtain an electrolytic solution in which the concentration of $LiPF_6$ is 1.1 mol/L.

**Separator**

Using the separator 2-1 prepared in Embodiment 1 of this application as a separator of the secondary battery.

**Secondary battery**

Stacking the positive electrode plate, the separator 2-1, and the negative electrode plate sequentially, placing the separator between the positive electrode and the negative electrode to serve a function of separation, and winding the stacked structure to obtain a bare cell. Putting the bare cell into an outer package, injecting the electrolytic solution, and sealing the package to obtain a secondary battery.

**Test methods of relevant parameters**

1. Scanning electron microscope test

Making an appropriate amount of specimens of lithium iron phosphate particles to be tested. Observing the morphology of the specimens with a ZEISS sigma 300 scanning electron microscope with reference to the standard JY/T010-1996.

2. Testing the volume median diameter

Testing the volume median diameter with reference to the standard GB/T 19077-2016/ISO 13320: 2009 *Particles Size Analysis Laser Diffraction Methods* by using a laser particle size analyzer (Malvern 3000, MasterSizer 3000) as a test instrument and using a helium-neon red light source as a main light source. Picking a clean small beaker, adding 1 gram of the specimen into the beaker, adding a drop of surfactant, and adding 20 ml of deionized water (the specimen concentration ensures that the shading degree is 8% to 12%). Sonicating the solution at 53 KHz/120 W for 5 minutes to ensure that the specimen is completely dispersed. Turning on the laser particle size analyzer, cleaning the optical path system, and automatically testing the background. Stirring the sonicated solution under test to disperse the specimen evenly, and putting the specimen into a sample cell as required to start measuring the particle diameter. The measurement results can be read from the instrument.

3. Testing the ionic conductivity

Cutting the separator into 40 mm $\times$ 20 mm $\times$ 9 $\mu$m specimens, and stacking the specimens of the separator in 4 layers as a group. Infiltrating the separator thoroughly by using a commercially available electrolytic solution, and then assembling the separator and the electrode plates in a glovebox to form a symmetrical battery for testing. Measuring the resistance R of the separator in an electrochemical workstation in a frequency range of 1 Hz to 100000 Hz by applying an alternating-current signal with a voltage amplitude of 5 mV. The ionic conductivity can be calculated from the measured result of the alternating-current resistance according to the following formula:

$$\delta = 1000 \, L/RA$$

In the formula above, $\delta$ represents ion conductivity, measured in mS/cm; A represents the area of the separator under test, measured in $cm^2$; L represents the thickness of the separator under test, measured in $\mu$m; and R represents the resistance of the separator under test.

4. Testing the glass transition temperature

Measuring the glass transition temperature by differential scanning calorimetry (DSC) with reference to the standard GB/T 19466.2.

5. Testing the solid content

Measuring the solid content with reference to the standard GB/T 1725-2007 *Paints, Varnishes and Plastics- Determination of Non-volatile Matter Content.*

**Table 1 Test conditions and test results of embodiments and comparative embodiments**

| Serial number | Monomer | | | Weight per cent (wt %) | Inorganic compound | | Tg(°C) | Span | Ionic conductivity (mS·c m⁻¹) | Dosage | |
| | Monomer 1 | Monomer 2 | Monomer 3 | | Type | Weight per cent (wt %) | | | | Mass of polymer emulsion (g) | Dry weight of inorganic compound (g) |
|---|---|---|---|---|---|---|---|---|---|---|---|
| Embodiment 1 | 65 | 20 | 15 | 80 | Alumina | 20 | -5 | 1.78 | 0.42 | 1000 | 112 |
| Embodiment 2 | 90 | 10 | 0 | 95 | Silicon dioxide | 5 | 0 | 1.56 | 0.42 | 1000 | 24 |
| Embodiment 3 | 90 | 10 | 0 | 90 | Sodium sulfate | 10 | 0 | 1.96 | 0.44 | 1000 | 50 |
| Embodiment 4 | 70 | 30 | 0 | 90 | Silicon dioxide | 10 | 10 | 1.89 | 0.46 | 1000 | 50 |
| Embodiment 5 | 90 | 5 | 5 | 90 | Silicon dioxide | 10 | 15 | 1.83 | 0.51 | 1000 | 50 |
| Embodiment 6 | 90 | 5 | 5 | 99 | Silicon dioxide | 1 | 15 | 2.13 | 0.52 | 1000 | 4.5 |
| Embodiment 7 | 85 | 10 | 5 | 90 | Alumina | 10 | 25 | 1.85 | 0.48 | 1000 | 50 |
| Embodiment 8 | 60 | 0 | 40 | 99.9 | Sodium benzoate | 0.1 | 30 | 1.24 | 0.44 | 1000 | 0.45 |
| Comparative Embodi | 100 | 0 | 0 | 50 | Silicon dioxide | 50 | - 30 | 1.76 | 0.35 | 1000 | 450 |

As can be seen from the above results, in contrast to the separator prepared from the binders of Comparative Embodiments 1 and 2, the separators prepared from the binders of Embodiments 1 to 8 possess a higher ionic conductivity. Especially, the ion conductivity of the separator can be further improved by adjusting the weight percent of each polymerizing monomer and the dry weight ratio between the organic polymer and the inorganic compound.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

**Claims**

1. A binder, comprising an organic polymer and an inorganic compound, wherein the organic polymer is polymerized from at least the following monomers:

   a first polymerizing monomer, containing at least one ester bond, wherein the first polymerizing monomer is optionally one or more of methyl acrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroacetate methacrylate, glycidyl methacrylate, or trimethylolpropane triacrylate; and further optionally, the first polymerizing monomer is one or more of methyl methacrylate, lauryl acrylate, lauryl methacrylate, or trimethylolpropane triacrylate;
   a second polymerizing monomer, containing at least one nitrile bond, wherein the second polymerizing monomer is optionally one or more of acrylonitrile, methacrylonitrile, or ethacrylonitrile, and further optionally, one or more of acrylonitrile or methacrylonitrile; and
   a third polymerizing monomer, containing at least one amide bond, wherein the third polymerizing monomer is optionally one or more of acrylamide, N-methylolacrylamide, or N-butoxymethacrylamide, and further optionally, one or more of acrylamide or N-methylolacrylamide, wherein
   a weight ratio between the first polymerizing monomer, the second polymerizing monomer, and the third polymerizing monomer is 1: (0 to 0.8): (0 to 0.15), and optionally 1: (0.05 to 0.2): (0.05 to 0.1).

2. The binder according to claim 1, wherein, based on a total weight of the organic polymer,

   a weight percent of the first polymerizing monomer is 60 wt% to 100 wt%, and optionally 60 wt% to 90 wt%;
   a weight percent of the second polymerizing monomer is 0 wt% to 30 wt%, and optionally 5 wt% to 15 wt%; and
   a weight percent of the third polymerizing monomer is 0 wt% to 40 wt%, and optionally 0 wt% to 25 wt%.

3. The binder according to claim 1 or 2, wherein volume average particle diameters $D_{10}$, $D_{50}$, and $D_{90}$ of the binder satisfy: $(D_{90} - D_{10})/D_{50}$ is less than 2.5, optionally less than 2, and further optionally less than 1.8.

4. The binder according to any one of claims 1 to 3, wherein

   a weight percent of particles of the organic polymer is 50 wt% to 99.9 wt%, optionally 60 wt% to 99 wt%, and further optionally 70 wt% to 99 wt%, based on a total dry weight of the binder; and
   a weight percent of the inorganic compound is 0.1 wt% to 50 wt%, optionally 1 wt% to 40 wt%, and further optionally 1 wt% to 30 wt%, based on a total dry weight of the binder.

5. The binder according to any one of claims 1 to 4, wherein a weight ratio between the organic polymer and the inorganic compound is 99: 1 to 1: 1, and optionally 70: 30 to 1: 1.

6. The binder according to any one of claims 1 to 5, wherein
   the inorganic compound is one or more selected from: an oxide of silicon, aluminum, calcium, zinc, or magnesium; sodium sulfate; sodium benzoate; calcium carbonate; or a modified material thereof; optionally, the inorganic compound is one or more of silicon dioxide, silica sol, aluminum oxide, zinc oxide, magnesium oxide, or sodium benzoate; and further optionally, the inorganic compound is one or more of vapor-phase silicon dioxide, silicon micropowder, aluminum oxide, or sodium benzoate.

7. The binder according to any one of claims 1 to 6, wherein
a surface of a particle of the binder is uneven, and inorganic oxide clusters with a particle diameter of 10 to 200 nm are evenly distributed on the surface.

8. The binder according to any one of claims 1 to 7, wherein a glass transition temperature of the binder is -20 °C to 30 °C.

9. A separator, comprising the binder according to any one of claims 1 to 8.

10. An electrode plate, comprising the binder according to any one of claims 1 to 8.

11. A secondary battery, comprising at least one of the binder according to any one of claims 1 to 8, the separator according to claim 9, or the electrode plate according to claim 10.

12. A battery module, comprising the secondary battery according to claim 11.

13. A battery pack, comprising the battery module according to claim 12.

14. An electrical device, comprising at least one of the secondary battery according to claim 11, the battery module according to claim 12, or the battery pack according to claim 13.

FIG. 1

**5**

FIG. 2

5

FIG. 3

FIG. 4

FIG. 5

FIG. 6

FIG. 7

## INTERNATIONAL SEARCH REPORT

| International application No. |
|---|
| **PCT/CN2022/083171** |

**A. CLASSIFICATION OF SUBJECT MATTER**

C09J 133/08(2006.01)i; C09J 133/10(2006.01)i; C09J 11/04(2006.01)i; C08F 220/18(2006.01)i; C08F 220/14(2006.01)i; C08F 220/44(2006.01)i; C08F 220/56(2006.01)i; H01M 4/62(2006.01)i; H01M 50/446(2021.01)i; H01M 10/0525(2010.01)i

According to International Patent Classification (IPC) or to both national classification and IPC

**B. FIELDS SEARCHED**

Minimum documentation searched (classification system followed by classification symbols)

C09J; C08F; H01M

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI, ISI: 粘结剂, 粘合剂, 丙烯酸酯, 丙烯腈, 乙烯基氰, 丙烯酰胺, 平均粒径, 中位径, D50, D90, D10, 无机物, 氧化物, 硫酸钠, 苯甲酸钠, 碳酸钙, 隔膜, 隔离膜, 极片, 电极, 锂电池, 锂离子电池, 二次电池, 电池模块, 电池包, 电池, 电池装置, binder, acrylate, acrylonitrile, vinyl cyanide, acrylamide, average particle size, median diameter, inorganic, oxide, sodium sulfate, sodium benzoate, calcium carbonate, separator membrane, electrode, lithium battery, lithium ion battery, secondary battery, battery module, battery pack, battery device

**C. DOCUMENTS CONSIDERED TO BE RELEVANT**

| Category* | Citation of document, with indication, where appropriate, of the relevant passages | Relevant to claim No. |
|---|---|---|
| X | WO 2010098380 A1 (ZEON CORP. et al.) 02 September 2010 (2010-09-02) description, paragraphs 20-34, 55-57, 73, 80, 94-97 and 125, and embodiments 1-8 | 1-14 |
| X | JP 2015185530 A (NIPPON ZEON CO., LTD.) 22 October 2015 (2015-10-22) description, paragraphs 8, 15-25, 33, 45-47, 108 and 114, and embodiment 1 | 1-14 |
| X | CN 113583532 A (SHANGHAI ENERGY NEW MATERIALS TECHNOLOGY CO., LTD.) 02 November 2021 (2021-11-02) description, paragraphs 23-37 | 1-14 |
| X | CN 103509500 A (HUZHOU OCHEM CHEMICAL CO., LTD.) 15 January 2014 (2014-01-15) description, paragraphs 25-81 | 1-14 |
| X | CN 102893427 A (LG CHEMICAL LTD.) 23 January 2013 (2013-01-23) description, paragraphs 27-32, 36-39 and 53-63 | 1-14 |

| ☑ Further documents are listed in the continuation of Box C. | ☑ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 November 2022** | **14 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/083171**

**C.** **DOCUMENTS CONSIDERED TO BE RELEVANT**

| Category* | Citation of document, with indication, where appropriate, of the relevant passages | Relevant to claim No. |
|---|---|---|
| X | CN 105778834 A (FUJIAN LANHAI HEISHI TECHNOLOGY CO., LTD.) 20 July 2016 (2016-07-20) embodiment 1-3, and application embodiment 1 | 1-14 |
| A | US 2020067082 A1 (SUMITOMO OSAKA CEMENT CO., LTD.) 27 February 2020 (2020-02-27) description, paragraphs 136-138 and 159-166, and embodiment 1 | 1-14 |

Form PCT/ISA/210 (second sheet) (January 2015)

**INTERNATIONAL SEARCH REPORT**
Information on patent family members

International application No.

**PCT/CN2022/083171**

| Patent document cited in search report | | | Publication date (day/month/year) | Patent family member(s) | | | Publication date (day/month/year) |
|---|---|---|---|---|---|---|---|
| WO | 2010098380 | A1 | 02 September 2010 | KR | 20110121690 | A | 08 November 2011 |
| | | | | JP | WO2010098380 | A1 | 06 September 2012 |
| | | | | JP | 5569515 | B2 | 13 August 2014 |
| | | | | KR | 101529758 | B1 | 17 June 2015 |
| JP | 2015185530 | A | 22 October 2015 | JP | 6273956 | B2 | 07 February 2018 |
| CN | 113583532 | A | 02 November 2021 | CN | 113583532 | B | 27 May 2022 |
| CN | 103509500 | A | 15 January 2014 | CN | 103509500 | B | 08 June 2016 |
| CN | 102893427 | A | 23 January 2013 | KR | 20110104791 | A | 23 September 2011 |
| | | | | WO | 2011115376 | A2 | 22 September 2011 |
| | | | | JP | 2013522843 | A | 13 June 2013 |
| | | | | US | 2013017429 | A1 | 17 January 2013 |
| | | | | CA | 2793246 | A1 | 22 September 2011 |
| | | | | TW | 201207058 | A | 16 February 2012 |
| | | | | EP | 2549564 | A2 | 23 January 2013 |
| | | | | WO | 2011115376 | A3 | 01 December 2011 |
| | | | | KR | 101187767 | B1 | 05 October 2012 |
| | | | | EP | 2549564 | A4 | 30 October 2013 |
| | | | | CA | 2793246 | C | 18 February 2014 |
| | | | | TW | I432542 | B | 01 April 2014 |
| | | | | CN | 102893427 | B | 06 January 2016 |
| | | | | EP | 2549564 | B1 | 12 October 2016 |
| | | | | US | 9666849 | B2 | 30 May 2017 |
| | | | | JP | 6208945 | B2 | 04 October 2017 |
| CN | 105778834 | A | 20 July 2016 | CN | 105778834 | B | 13 October 2017 |
| US | 2020067082 | A1 | 27 February 2020 | CA | 3052009 | A1 | 23 February 2020 |
| | | | | JP | 2020030995 | A | 27 February 2020 |
| | | | | CN | 110858645 | A | 03 March 2020 |
| | | | | VN | 68589 | A | 25 February 2020 |
| | | | | US | 2020067082 | A1 | 27 February 2020 |
| | | | | JP | 6964055 | B2 | 10 November 2021 |
| | | | | US | 11251422 | B2 | 15 February 2022 |
| | | | | CA | 3052009 | C | 09 August 2022 |

Form PCT/ISA/210 (patent family annex) (January 2015)